# EUROPÄISCHE PATENTSCHRIFT

(11) **EP 0 553 450 B1**
(45) Veröffentlichungstag und Bekanntmachung des Hinweises auf die Patenterteilung: **01.05.1996**
(21) Anmeldenummer: 92120971.4
(22) Anmeldetag: 09.12.1992
(51) Int. Cl.: B61H 5/00

(54) **Bremszange für Scheibenbremsen von Schienenfahrzeugen**
Disc brake caliper for railway vehicles
Pince pour frein à disque des véhicules ferroviaires

(30) Priorität: 30.01.1992 DE 4202635
(43) Veröffentlichungstag der Anmeldung: 04.08.1993
(73) Patentinhaber: KNORR-BREMSE AG, D-80710 München (DE)
(72) Erfinder: Kerscher, Albert, W-8057 Eching (DE); Staltmeir, Josef, W-8000 München 40 (DE)

(56) Entgegenhaltungen:
- EP-A- 0 324 911
- DE-A- 2 609 465
- FR-A- 2 372 350

## Beschreibung

Die Erfindung bezieht sich auf eine Bremszange nach dem Oberbegriff des Anspruches 1.

Bei schnellfahrenden Schienenfahrzeugen sind zum Erzielen der erforderlichen Bremswirkung und Aufnahme der Bremsenergie bis zu vier Bremsscheiben je Radsatz erforderlich. Dies bedingt sehr schmal bauende Bremszangen mit entsprechend kurzen, zwischen die anderen Enden der Bremshebel eingeordneten Bremszylindern. Die Zangenübersetzung und die Belagkraft pro Scheibe ist dabei relativ niedrig. Für die Feststellbremse benötigt man jedoch eine möglichst hohe Belagkraft, um die Anzahl der Feststellbrems-Anordnungen möglichst gering halten zu können.

Für die Feststellbremse sind Federspeicherzylinder, gegebenenfalls kombiniert mit aktiven Bremszylindern, bekannt, wobei die Speicherfeder um den üblicherweise in einem Kolbenstangenrohr angeordneten, eine Gewindespindel mit wenigstens einer Mutter sowie Kupplungseinrichtungen aufweisenden Bremsbelagverschleiß-Nachstellmechnismus angeordnet ist. Diese Geräte ergeben eine relativ schmale Bauform der Bremszange. Die Speicherfeder wirkt hierbei jedoch direkt auf das Kolbenstangenrohr, ohne zusätzliche Kraftübersetzung. Weil die Zangenübersetzung, wie vorstehend bereits erwähnt, relativ gering ist, erhhält man aus der Speicherfeder nur wenig Belagkraft. Deshalb sind zum Erfüllen der Feststell-Bremsanforderungen viele Geräte mit Federspeichern erforderlich.

Für Schienenfahrzeuge ist aus dem DE-GM 1 704 651 bereits eine Bremszangenanordnung der eingangs genannten Art bekannt, bei welcher lediglich anstelle des Federspeicherzylinders ein üblicher, aktiver Bremszylinder vorgesehen ist. Dieser Bremszylinder ist bei der bekannten Anordnung mit in der Ebene der Bremszange und der radialen Mittelebene der Bremsscheibe liegender Achse im Anschluß an die Bremszange auf deren der Bremsscheibe abgewandten Seite angeordnet, die bekannte Bremszangen-Anordnung erfordert daher einen sehr langen, sich radial von der Bremsscheibe weg erstreckenden Einbauraum. Dieser Einbauraum steht häufig nicht zur Verfügung, die bekannte Bremszangen-Anordnung ist daher bei solchen Schienenfahrzeugen nicht verwendbar.

Aus der DE-A 33 44 616 ist eine Klotzbremseinheit für Schienenfahrzeuge bekannt, welche einen aktiven Bremszylinder und einen Federspeicherzylinder beinhaltet, welche mit zueinander rechtwinklig verlaufenden Achsrichtungen angeordnet sind, wobei die Achse des Federspeicherzylinders rechtwinklig zur Betätigungsrichtung des Bremsklotzes verläuft. Der Federspeicherzylinder ist hierbei mit Abstand zu einer horizontalen Mittelebene durch die Bremsklotzeinheit angeordnet. Bei dieser bekannten Bremsklotzeinheit ist der Bremszylinder über einen Übersetzungshebel und der Federspeicherzylinder über ein Keilgetriebe mit dem Übersetzungshebel gekoppelt, der Übersetzungshebel seinerseits wirkt über eine Spielnachstellvorrichtung auf den Bremsklotz ein.

Eine gattungsgemäße Bremszange ist aus der EP 0324911 bekannt. Gegenüber dieser Bremszange zielt die Erfindung darauf ab, die Bremszange derart weiterzubilden, daß die Bremsbacken auch während eines Festbremshubes mit Hilfe des Federspeicherteiles mit zunehmender Kraft an die Bremsbacken gedrückt werden.

Die Erfindung erreicht dieses Ziel durch den Gegenstand des Anspruches 1.

Nach der weiteren Erfindung vorteilhafte Ausgestaltungsmöglichkeiten für eine derartige Bremszange zeigen die Unteransprüche auf.

Die Erfindung wird nachstehend anhand der Figuren 1-6 erläutert, wobei
- Fig.1: eine durch einen aktiven Bremszylinder betätigbare Bremszange gemäß dem Stand der Technik zeigt, die für in Mehrfachanordnung je Radsatzwelle vorgesehenen Scheibenbremsen verwendbar ist,
- Fig.2 bis Fig.4: unterschiedliche Ausführungsformen für nach der Erfindung ausgestaltete Bremszangen in ihren erfindungswesentlichen Teilen,
- Fig.5: einen vergrößerten Ausschnitt aus Fig.4 und
- Fig.6: ein Schnittbild gemäß Linie A-B in Fig.5 zeigt.

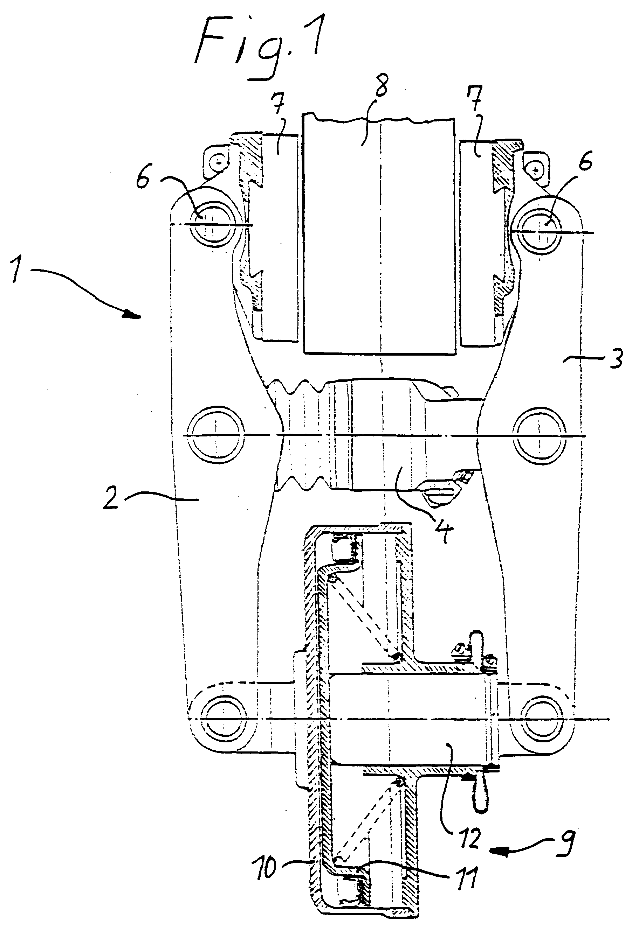

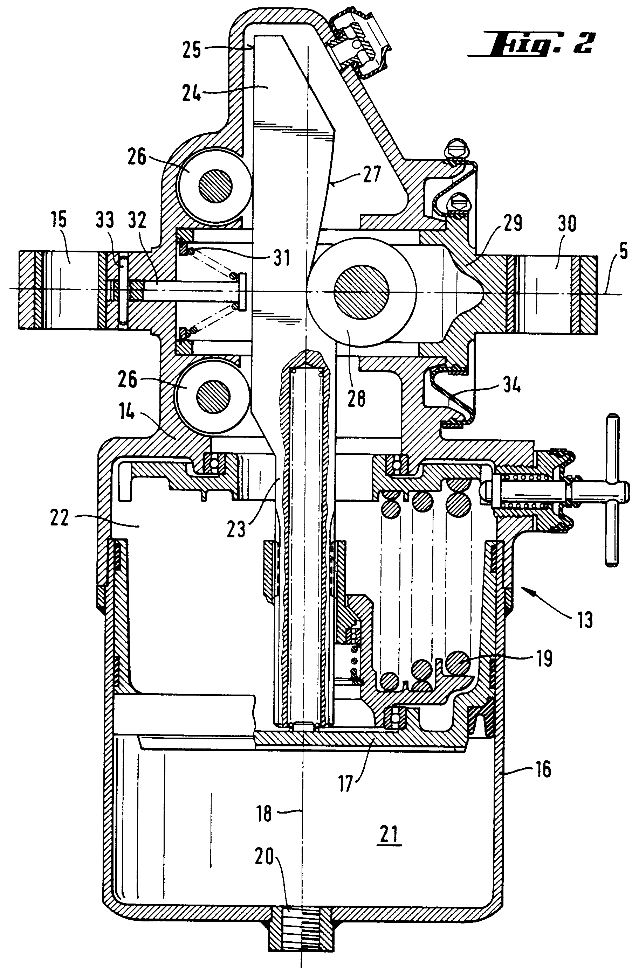

Die Fig.1 zeigt eine Bremszange 1, welche zwei im wesentlichen zueinander etwa parallel verlaufende Bremszangenhebel 2 und 3 aufweist. Die beiden Bremszangenhebel 2 und 3 sind im mittleren Bereich ihrer Längserstreckung durch eine Zugstange 4 gelenkig miteinander verbunden. Die Bremszangenhebel 2 und 3 sowie die Zugstange 4 liegen in bzw. verlaufen parallel zu einer zur Zeichenebene der Fig.1 parallel verlaufenden Bremszangenebene 5, welche in den Figuren 2 bis 6 angegeben ist. Die einen Enden der Bremszangenhebel 2 und 3 tragen vermittels Bolzen 6 angelenkte Bremsbacken 7, zwischen welche eine Bremsscheibe 8 eingreift. Zwischen den anderen Enden der Bremszangenhebel 2 und 3 befindet sich ein aktiver Bremszylinder 9, dessen Gehäuse 10 am einen Bremszangenhebel 2 und dessen Kolben 11 über eine druckstößelartige Kolbenstange 12 am anderen Bremszangenhebel 3 angelenkt ist. Die Kolbenstange 12 kann dabei eine übliche Nachstellvorrichtung beinhalten, welche ein Kolbenstangenrohr, eine in diesem eingeordnete Gewindespindel mit wenigstens einer Mutter und Kupplungseinrichtungen für diese umfaßt; die Nachstellvorrichtung ist in Fig.1 nicht dargestellt. Der Bremszylinder 9 weist eine sehr geringe Baulänge auf, die Bremszange 1 kann daher schmal, im wesentlichen durch die Breite der Bremsscheibe 8 bestimmt ausgebildet werden. Es ist ersichtlich, daß die Bremszange 1 ein entsprechend der Hebelverhältnisse der Bremszangenhebel 2,3 nur geringes Übersetzungsverhältnis aufweist, die Anpreßkraft der Bremsbacken 7 an die Bremsscheibe 8 also nur um einen niedrigen Übersetzungsfaktor höher als die vom Bremszylinder 9 ausübbare Spreizkraft für die Bremszangenhebel 2,3 ist, was allerdings für die Betriebsbremsung von in Mehrfachanordnung je Radsatzwelle vorgesehene Scheibenbremsen von gegebenenfalls auch schnellfahrenden Schienenfahrzeugen ausreichend ist.

Aus Fig.1 ist ersichtlich, daß zum Erzielen einer Feststellbremsfunktion der dortige Bremszylinder 9 nicht einfach durch einen Kombizylinder üblicher Bauart, umfassend einen aktiven Bremszylinder und einen zu diesem gleichachsigen Federspeicherzylinder, ersetzbar ist, da ein derartiger Kombizylinder eine wesentlich zu große Baulänge aufweisen würde und sein Federspeicherzylinderteil zudem auch nur eine geringe Zuspannkraft für die Bremsbacken 7 ausüben könnte, was zum Erreichen der erforderlichen Festbremswirkung für das Schienenfahrzeug das Ausstatten vieler Bremszangen des Schienenfahrzeuges mit derartigen, relativ teueren Kombizylindern erfordern würde. Auch das blose Ersetzen des Bremszylinders 9 nach Fig.1 durch einen Federspeicherzylinder, welcher die Betriebsbrems- und die Feststellbremsfunktion übernehmen müßte, würde Schwierigkeiten bereiten, da insbesondere infogle der kräftig und großvolumig auszubildenden Speicherfeder derartige Federspeicherzylinder eine wesentlich größere Baulänge als der Bremszylinder 9 aufweisen und daher zwischen den Bremshebeln 2 und 3 nicht unterzubringen wären; eine gewisse Schwierigkeit wäre auch darin zu sehen, daß auch der Bremsdruckverlauf während Betriebsbremsungen umgestaltet werden müßte. Unter Inkaufnahme des letzterwähnten Mangels ist in Fig.2 eine auch für Betriebsbremsungen nutzbare Anordnung eines Federspeicherbremszylinders dargestellt, bei welcher die Bremszange 1 schmal verbleiben kann und welche hohe Zuspannkräfte für die Bremsbacken 7 ermöglicht; zugleich bleibt die Baulänge der Bremszange in radialer Richtung zur Bremsscheibe 8 gering.

In Fig.2 ist ein Federspeicherzylinder 13 dargestellt, dessen Gehäuse 14 in der Bremszangenebene 5 ein Anlenkauge 15 zur Anlenkung des nicht dargestellten Bremszangenhebels 2 aufweist. In einem von der Bremszangenebene 5 abwärtsragenden Abschnitt 16 des Gehäuses 14 ist der Federspeicherkolben 17 vertikalverschieblich gelagert, seine Achse 18 verläuft senkrecht zur Bremszangenebene 5. Der Federspeicherkolben 17 ist von oben durch die mehrgeteilte Speicherfeder 19 belastet und von unten von der durch einen Leitungsanschluß 20 in eine Beaufschlagungskammer 21 einspeisbaren Druckluft beaufschlagbar. Der Federspeicherzylinder 13 ist mit einer im Bereich der die Speicherfeder 19 aufnehmenden Federkammer 22 angeordneten Notlöseeinrichtung bekannter Bauart ausgestattet, in der Zeichnung ist eine Notlöseeinrichtung gemäß der DE-PS 27 48 540 dargestellt, ihr Aufbau und ihre Funktionsweise sind bekannt und brauchen daher hier nicht weiter beschrieben zu werden. Es kann jedoch auch eine Notlöseeinrichtung einer anderen Bauart vorgesehen werden, gegebenenfalls kann die Notlöseeinrichtung auch entfallen. In der Fig.2 sind wesentliche Teile der Notlöseeinrichtung und der Speicherfeder 19 nur im rechten Teil der Federkammer 22 dargestelt, im linken Teil sind sie zum Vereinfachen weggelassen. Die von der Speicherfeder 19 auf den Federspeicherkolben 17 ausübbare Kraft wird als Zugkraft auf eine Kolbenstange 23 übertragen, welche sich zur Bremszangenebene 5 hin erstreckt. Im Bereich der Bremszangenebene 5 geht die Kolbenstange 23 in ein Keilstück 24 über, welches sich gegenüberliegend zum Abschnitt 16 des Gehäuses 14 von der Bremszangenebene 5 nach oben erstreckt. Das Keilstück 24 weist dem Anlenkauge 15 zugewandt eine Fläche 25 auf, welche eben ist und die Bremszangenebene 5 rechtwinklig schneidet. Mit der Fläche 25 ist das Keilstück 24 an zwei erste Rollen 26 abrollbar, welche mit Abstand zueinander spiegelbildlich zur Bremszangenebene 5 am Gehäuse 14 drehbar gelagert sind. Gegenüberliegend ist das Keilstück 24 mit einer nach oben ansteigenden Keilfläche 27 versehen. Die Keilfläche 27 ist schwach konvex gekrümmt ausgebildet, sie ist an einer zweiten Rolle 28 abrollbar, welche um eine parallel zu den Drehachsen der ersten Rolle 26 verlaufende, in der Bremszangenebene 5 liegende Drehachse drehbar an einem Druckstößel 29 gelagert ist. Der Druckstößel 29 verläuft in der Bremszangenebene 5 und ist in Entfernungsrichtung vom Anlenkauge 15 verschieblich im Gehäuse 14 gelagert, er ist gegabelt ausgeführt und umgreift mit seinen Gabelteilen mit Spiel das Keilstück 24. An seinem ins Freie ragenden Ende ist der Druckstößel 29 mit einem Lagerauge 30 zum Anlenken des anderen Endes des in Fig.2 nicht dargestellten Bremszangenhebels 3 versehen. Am dem Lagerauge 15 zugewandten Ende ist am Druckstößel 29 eine Feder 31 abgestützt, welche sich zum Keilstück 24 hin erstreckt und mit ihrem zweiten Ende an einem Zuganker 32 abgefangen ist, welcher seinerseits sich in das Gehäuse 14 erstreckt und dort mittels eines Querstiftes 33 gehaltert ist; die Feder 31 belastet somit den Druckstößel 29 in Annäherung seines Lagerauges 30 an das Lagerauge 15, seine linke Endstellung ist durch Anschlagen an das Gehäuse 14 festgelegt. Die Führung des Druckstößels 29 im Gehäuse 14 ist durch einen Faltenbalg 34 abgedeckt.

Im in Fig.2 dargestellten Lösezustand der Bremszange befindet sich der Federspeicherkolben 17 und damit auch das Keilstück 24 unter der Druckluftbeaufschlagung der Beaufschlagungskammer 21 in ihren höchsten Stellungen, die zweite Rolle 28 liegt dabei am unteren Ende der Keilfläche 27 an, das Keilstück 24 ist in diesem Bereich am schmalsten. Der Druckstößel 29 befindet sich somit in seiner dem Anlenkauge 15 angenäherten, linken Endstellung.

Zum Bremsen wird der in der Beaufschlagungskammer 21 herrschende Druck abgesenkt, die Speicherfedern 19 vermögen daher den Federspeicherkolben 17 abwärts zu drücken, wobei sie sich teilweise entspannen und das Keilstück 24 wird entsprehcend nach unten gezogen. Bei dieser Bewegung des Keilstückes 24 läuft die zweite Rolle 28 auf die Keilfläche 27 auf und wird dementsprechend mitsamt dem Druckstößel 29 nach rechts gedrückt, wodurch die anderen Enden der Bremszangenhebel 2 und 3 auseinandergespreizt werden, die Scheibenbremse wird somit betätigt.

Die Bremsbacken 7 sollen hierbei während des Festbremshubes mit zunehmender Kraft an die Bremsscheibe 8 angedrückt werden. Um hierbei die erwähnte, teilweise Entspannung der Speicherfeder 19 im wesentlichen zu kompensieren, ist die Keilfläche 27 wie erwähnt schwach konvex gekrümmt ausgebildet: Die Rolle 28 läuft somit während des Festbremshubes auf abnehmend ansteigende Bereiche der Keilfläche 27 auf, die Keilwirkung, d.h. die vom Keilstück 24 zwischen den Rollen 26 und 28 ausgeübte Spreizkraft wird durch diesen Effekt gesteigert und kompensiert somit die abnehmende Kraft der Speicherfeder 19; insgesamt ergibt sich somit mit absinkendem Federspeicherkolben 17 eine zunehmende Spreizung der anderen Enden der Bremszangenhebel 2 und 3 und somit ein sich verstärkendes Anspressen der Bremsbacken 7 an die Bremsscheibe 8.

Die Keilfläche 27 kann in ihrem dem Federspeicherkolben 17 zugewandten Endabschnitt, also dem Abschnitt, welcher im Löse- bis zum kraftklosen Anlegezustand der Scheibenbremse mit der zweiten Rolle 28 zusammenwirkt, eine größere Steigung als in ihrem nach oben anschließenden, in Festbremszuständen der Scheibenbremse mit der zweiten Rolle 28 zusammenwirkenden, gegebenenfalls wie vorstehend beschrieben konvex gekrümmten Bereich aufweisen. Hierdurch wird zu Beginn von Bremsvorgängen ein rasches Anlegen der Bremsbacken 7 an die Bremsscheibe 8 bei nur kleinem Abwärtshub des Federspeichrkolbens 17 und damit geringer Teil Entspannung der Speicherfeder 19 erreicht.

Bei voller Wiederkehr des Beaufschlagungsdruckes in der Beaufschlagungskammer 21 kehren alle Teile in die dargestellte Ausgangslage zurück.

Wird bei druckloser Beaufschlagungskammer 21 die Notlöseeinrichtung betätigt, so wird der Kraftschluß zwischen dem Federspeicherkolben 17 und dem Keilstück 24 unterbrochen, der Federspeicherkolben 17 senkt sich bis zum Aufsetzen auf den Boden der Beaufschlagungskammer 21 ab, während das Keilstück nach oben frei beweglich wird, bei der dargestellten Ausführungsform der Notlöseeinrichtung sogar einen Bewegungsimpuls nach oben erfährt.

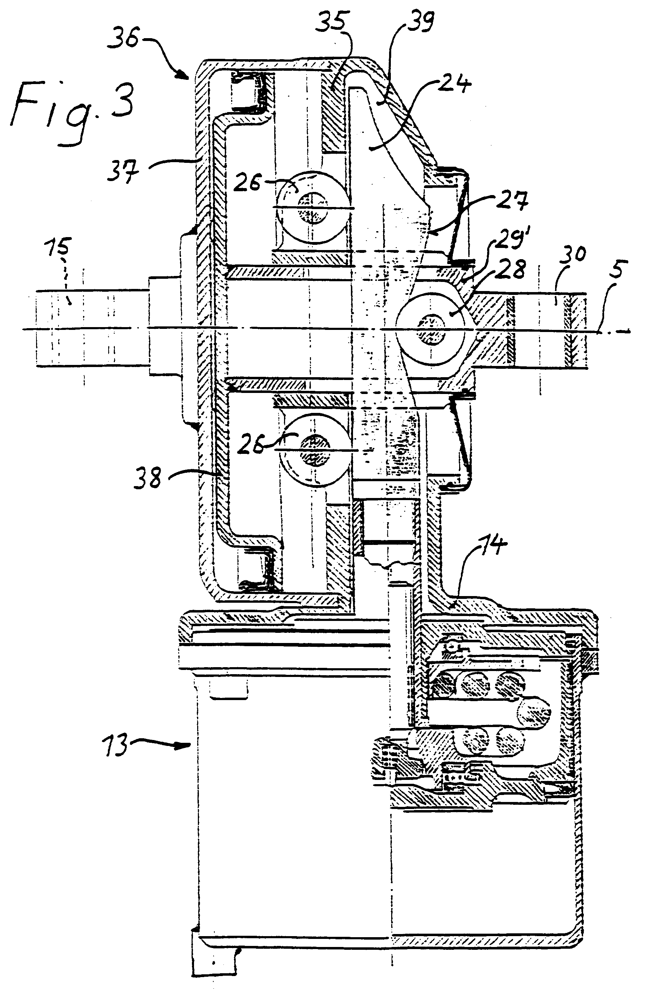

Bei der Ausbildung nach Fig.3 ist in den oberen Abschnitt 35 des Gehäuses 14 links der ersten Rollen 26 ein aktiver Bremszylinder 36 für Betriebsbremsungen integriert, der Federspeicherzylinder 13 kann daher alleinig für Feststellbremsungen genutzt werden. Hierzu ist gemäß Fig.3 der links der ersten Rolle 26 befindliche Teil des Abschnittes 35 des Gehäuses 14 zu einem Zylinder geformt, an dessen Boden 37 das Anlenkauge 15 gehaltert ist. Im Bremszylinder 36 ist mit in der Bremszangenebene 5 liegender Achse ein Kolben 38 verschieblich gelagert, der linksseitig von einem Bremsdruck beaufschlagbar ist und rechtsseitig mit dem linken Ende des Druckstößels 29' verbunden ist, welcher somit zugleich die Kolbenstange des Bremszylinders 36 bildet. Das Keilstück 24 sowie die Rollen 26 und 28 befinden sich somit in der Außenluftkammer 39 des Bremszylinders 36. Im übrigen entspricht die Anordnung derjenigen nach Fig.2, lediglich die Feder 31 mit dem Zuganker 32 können entfallen und durch eine nicht dargestellte Rückdruckfeder für den Kolben 38 ersetzt sein. Während Betriebsbremsungen wird der Kolben 38 des Bremszylinders 36 druckluftbeaufschlagt und somit gemäß Fig.3 nach rechts verschoben, wobei er den zugleich seine Kolbenstange bildenden Druckstößel 29' unter Abheben der Rolle 28 von der Keilfläche 27 mitnimmt; die anderen Enden der Bremszangenhebel 2 und 3 werden hierbei auseinandergespreizt. Die Feststellbremsungen erfolgen wie vorstehend zu Fig.2 beschreiben.

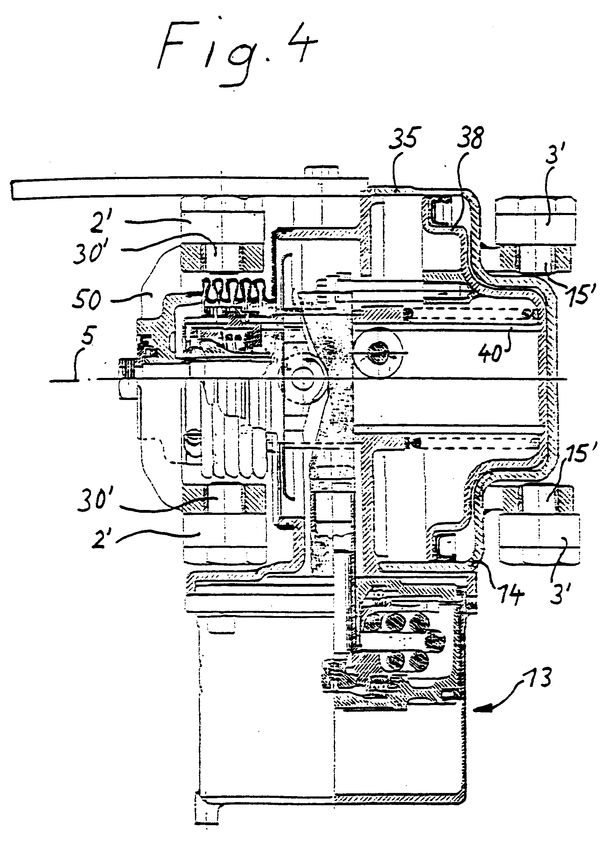

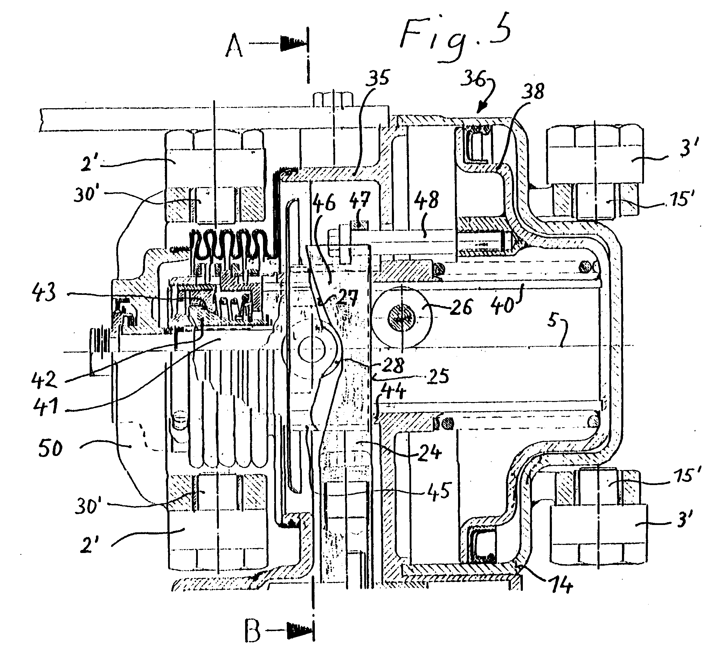

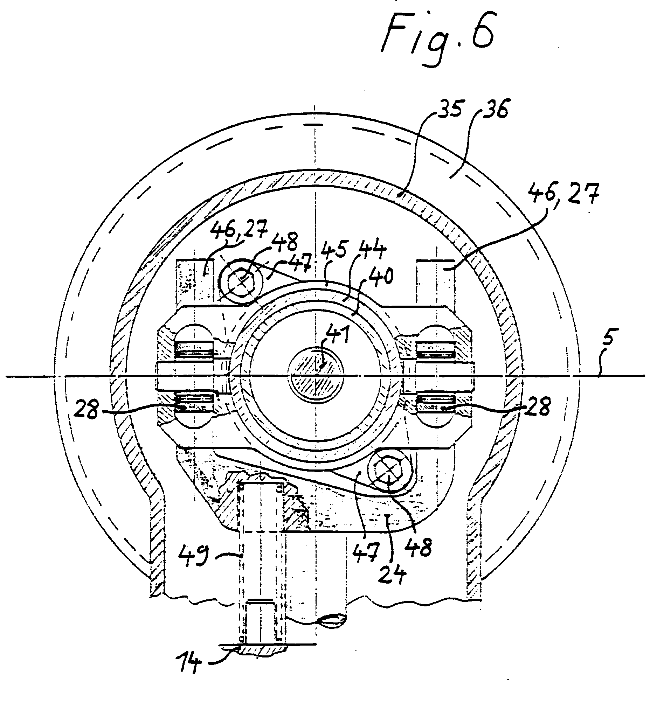

Die Anordnung nach Fig.4 entspricht im Prinzip derjenigen nach Fig.3, sie ist lediglich um eine Vertikalachse um 180° gedreht dargestellt, für doppelwangige Bremszangenhebel 2 und 3 ausgebildet und der Bremszylinder 36 beinhaltet eine mehrteilige, mit einer integrierten Nachstellvorrichtung ausgestattete Kolbenstange, welche gemäß der vergrößerten Darstellung nach Fig.5 ein mit dem Kolben 38 gekoppeltes Kolbenstangenrohr 40, eine Gewindespindel 41 mit einer Mutter 42 und Kupplungseinrichtungen 43 für diese Mutter 42 umfaßt. Derartige Nachstellvorrichtungen für das Lösespiel der Scheibenbremse sind vielfach, beispielsweise aus der DE-PS 25 54 806 bekannt, sie kann jedoch auch eine andere Bauart als dort gezeigt und beschrieben aufweisen. Wie aus den Fig.5 und 6 erkennbar, ist am Abschnitt 35 des Gehäuses 14 ein nach links auskragender Rohransatz 44 vorgesehen, welcher das Kolbenstangenrohr 40 in seinem linken, die Nachstellvorrichtung beinhaltenden Abschnitt mit Schiebespiel umgibt. Auf diesem Rohransatz 44 ist außen verschieblich ein Hülsenteil 45 gelagert, welches seitlich je eine zweite Rolle 28 trägt; die beiden zweiten Rollen 28 sind zueinander koaxial mit in der Bremszangenebene 5 verlaufender Drehachse am Hülsenteil 45 gelagert. Das Keilstück 24 ist gegabelt ausgebildet und umgreift mit seinen beiden Gabelteilen 46, deren jedes eine Keilfläche 27 der vorstehend bereits beschriebenen Art trägt, das Hülsenteil 45, derart, daß die beiden zweiten Rollen 28 auf diesen Keilflächen 27 abrollbar sind. Andererseits sind die Gabelteile 46 mit den Flächen 25 versehen, an deren jeder eine erste Rolle 26 abrollbar ist. Die beiden ersten Rollen 26 sind zur Bremszangenebene 5 nach oben vesetzt zueinander koaxial am Abschnitt 35 drehbar gelagert, derart, daß eine Verbindungsgerade zwischen den Achsen der ersten und der zweiten Rollen 26 bzw. 28 annähernd rechtwinklig zur Keilfläche 27 verläuft. Unterhalb der Bremszangenebene 5 ist im Gegensatz zur Ausführung nach Fig.3 im Ausführungsbeispiel nach den Fig.4 bis 6 kein erstes Rollenpaar vorgesehen, es kann bei Bedarf jedoch angeordnet werden. Das Hülsenteil 45 weist zur Bremszangenebene 5 um etwa 45° geneigt auskragende Augen 47 auf, von welchen sich parallel zum Kolbenstangenrohr 40 außerhalb dieses verlaufende Zuganker 48 zum Kolben 38 erstrecken. Aus Fig.6 ist noch eine vertikale Feder 49 zu ersehen, welche sich unten gegen ein Teil des Gehäuses 14 und oben gegen das Keilstück 24 abstützt; Die Funktion dieser Feder entspricht weitgehend derjenigen der Feder 31 nach Fig.2, sie sichert beim Notlösen des Federspeicherzylinders 13 ein Hochdrücken des Keilstückes 24 in dessen den Lösezustand der Scheibenbremse entsprechende, obere Endstellung.

Die Gewindespindel 41 trägt an ihrem linksseitgen Ende ein Bügelteil 50, welches an seinen in Richtung zum Kolben 38 abgewinkelten Enden ober- und unterhalb der Bremszangenebene 5 je ein Lagerauge 30' zum Anlenken jeweils einer Wange 2' des doppelwangig ausgebildeten Bremszangenhebels 2 aufweist. Entsprechend ist der Abschnitt 35 des Gehäuses 14 beiderseits der Bremszangenebene 5 mit je einem Anlenkauge 15' zum Anlenken der beiden Wangen 3' des doppelwangigen Bremszangenhebels 3 versehen. Im übrigen entspricht der Aufbau der Ausführung nach den Fig.4 bis 6 derjenigen nach Fig.3 und braucht daher hier nicht weiter erläutert zu werden. Es ist erkennbar, daß infolge des radial verschachtelten Aufbaues von Nachstelleinrichtung, Hülsenteil 45 und Lageraugen 30' sich ein sehr kurzer Aufbau mit geringem Abstand der Anlenkaugen 15' zu den Lageraugen 30' ergibt, wodurch ein schmaler Aufbau der Bremszange 1 ermöglicht wird. Von Vorteil ist, daß bei Betätigung der Feststellbremse vermittels des Federspeicherzylinders 13 die Nachstellvorrichtung für das Lösespiel der Scheibenbremse voll wirksam ist.

### Bezugszeichenliste

- 1: Bremszange
- 2,3: Bremszangenhebel
- 2'3': Wange
- 4: Zugstange
- 5: Bremszangenebene
- 6: Bolzen
- 7: Bremsbacke
- 8: Bremsscheibe
- 9: Bremszylinder
- 10: Gehäuse
- 11: Kolben
- 12: Kolbenstange
- 13: Federspeicherzylinder
- 14: Gehäuse
- 15: Anlenkauge
- 15': Anlenkauge
- 16: Abschnitt
- 17: Federspeicherkolben
- 18: Achse
- 19: Speicherfeder
- 20: Leitungsanschluß
- 21: Beaufschlagungskammer
- 22: Federkammer
- 23: Kolbenstange
- 24: Keilstück
- 25: Fläche
- 26: erste Rolle
- 27: Keilfläche
- 28: zweite Rolle
- 29: Druckstößel
- 29': Druckstößel
- 30: Lagerauge
- 30': Lagerauge
- 31: Feder
- 32: Zuganker
- 33: Querstift
- 34: Faltenbalg
- 35: Abschnitt
- 36: Bremszylinder
- 37: Boden
- 38: Kolben
- 39: Außenluftkammer
- 40: Kolbensangenrohr
- 41: Gewindespindel
- 42: Mutter
- 43: Kupplungseinrichtung
- 44: Rohransatz
- 45: Hülsenteil
- 46: Gabelteil
- 47: Auge
- 48: Zuganker
- 49: Feder
- 50: Bügelteil

## Patentansprüche

1. Bremszange für insbesondere in Mehrfachanordnung je Radsatzwelle vorgesehene Scheibenbremsen von Schienenfahrzeugen, mit zwei Bremszangenhebel (2,3), die an ihren einen, gegenüberliegenden Enden Bremsbacken (7) tragen, welche beiderseitig an eine zwischen diese Enden eingreifenden Bremsscheibe (8) anpreßbar sind, wobei die Bremszangenhebel (2,3) im mittleren Bereich ihrer Längserstreckung vermittels einer Zugstange (4) gelenkig miteinander gekoppelt sind, wobei die anderen Enden der Bremszangenhebel (2,3) durch ein durch die Federkraft eines vermittels Druckluft spannbaren Federspeicherzylinders (13) betätigbaren Keilgetriebes auseinanderspreizbar sind, und wobei das linearverschiebliche, mit der Kolbenstange (23) des Federspeicherzylinders (13) verbundene Keilstück (24) des Keilgetriebes zwischen die anderen Enden der Bremszangenhebel (2,3) eingreift und an mit diesen drehbar gekoppelten Rollen (26,28) abrollbar ist, wobei der Federspeicherzylinder (13) mit zumindest annähernd rechtwinklig zu einer durch die beiden Bremszangenhebel (2,3) und die Zugstange (4) verlaufenden Bremszangenebene (5) stehender Achse (18) zu einer Seite der Bremszangenebene (5) angeordnet ist,
dadurch gekennzeichnet, daß der Federspeicherzylinder (13) unter seiner Speicherfederbelastung das Keilstück (24) zwischen die Rollen (26,28) ziehend wirksam ist, wobei eine Keilfläche (27) über ihre Längserstreckung schwach konvex gekrümmt ist.

2. Bremszange nach Anspruch 1, dadurch gekennzeichnet, daß das Keilstück (24) nur einseitig eine Keilfläche (27) und gegenüberliegend eine parallel zur Achse des Federspeicherzylinders (13) verlaufende Fläche (25) aufweist.

3. Bremszange nach Anspruch 2, dadurch gekennzeichnet, daß das Gehäuse (14) des Federspeicherbremszylinders (13) am anderen Ende des einen Bremshebels (2) angelenkt ist, am Gehäuse (13) in Abstand zur Bremszangenebene (5) wenigstens eine um eine im wesentlichen parallel zur Längsrichtung der Bremszangenhebel (2,3) verlaufende Drehachse drehbare, erste Rolle (26) gelagert ist, die an der parallel zur Achse (18) des Federspeicherzylinders (13) verlaufenden Fläche (25) des Keilstückes (24) abrollbar ist, und daß die gegenüberliegend zu der Fläche (25) am Keilstück (24) angeordnete und mit dieser einen in Entfernungsrichtung zum Federspeicherzylinder (13) ansteigenden Keil bildende Keilfläche (27) an einer zweiten Rolle (28) abrollbar ist, die um eine parallel zu den Drehachsen der anderen Rolle (26) in der Bremszangenebene (5) verlaufende Drehachse drehbar an einem im Gehäuse (14) in Spreizrichtung der beiden anderen Enden der Bremszangenhebel (2,3) verschieblichen Druckstößel (29) gelagert ist.

4. Bremszange nach Anspruch 3, dadurch gekennzeichnet, daß die Keilfläche (27) in ihrem im Löse- bzw. zum kraftlosen Anlegezustand der Scheibenbremse wirksamen Bereich eine größere Steigung als im anschließenden, im Festbremszustand der Scheibenbremse wirksamen Bereich aufweist.

5. Bremszange nach Anspruch 3, dadurch gekennzeichnet, daß die Verbindungsgerade zwischen den Achsen der ersten (26) und der zweiten Rolle (28) etwa rechtwinklig zur Keilfläche (27) verläuft.

6. Bremszange nach Anspruch 3 oder 5, dadurch gekennzeichnet, daß spiegelbildlich zur ersten Rolle eine weitere Rolle (26) am Gehäuse gelagert ist, wobei die Bremszangenebene (5) die Spiegel ebene bildet (Fig.2,3).

7. Bremszange nach Anspruch 6 oder 7, gekennzeichnet durch die Kombination des Federspeicherzylinders (13) mit einem mit in Spreizrichtung der anderen Enden der Bremszangenhebel (2,3) verlaufender Achsrichtung zwischen diese Enden angeordneten Betriebsbremszylinder (36), wobei das Gehäuse des Betriebsbremszylinders (36) und das Gehäuse des Federspeicherzylinders (13) ein gemeinsames, gegebenenfalls mehrteiliges, festes Gehäuse (13) bilden, die Rollen (26,28) und das Keilstück (24) sich in der Außenluftkammer (39) des Betriebsbremszylinders (36) befinden und der Druckstößel (29') zugleich die Kolbenstange des Betriebsbremszylinders (36) bildet .

8. Bremszange nach Anspruch 7, wobei der Betriebsbremszylinder eine mehrteilige Kolbenstange, umfassend ein mit dem Kolben (38) gekoppeltes Kolbenstangenrohr (40), eine in diesem angeordnete, eine Gewindespindel (41) mit wenigstens einer Mutter (42) und Kupplungseinrichtungen (43) für diese wenigstens eine Mutter (42) umfassende Nachstelleinrichtung und einen Ausgangsstößel, dadurch gekennzeichnet, daß die wenigstens eine erste Rolle (26) am Gehäuse (14) und die zweite Rolle (28) an einem das Kolbenstangenrohr (40) umgebenden, über Zuganker (48) mit dem Kolben (38) verbundenen Hülsenteil (45) gelagert ist.

9. Bremszange nach Anspruch 8, dadurch gekennzeichnet, daß jeweils zwei erste (26) und zwei zweite Rollen (28) vorgesehen sind, die jeweils zueinander gleichachsig beiderseits der Kolbenstange angeordnet sind, daß das Keilstück (24) gegabelt ausgebildet ist und mit seinen Gabel teilen (46) die Kolbenstange umfaßt, und daß das Hülsenteil (45) verschieblich auf einem zylindrischen, das Kolbenstangenrohr (40) umfassenden, gehäusefesten Rohransatz (44) gelagert ist.

10. Bremszange nach Anspruch 9, wobei der Federspeicherzylinder eine Motlöseeinrichtung mit Schraubgetriebe aufweist, dadurch gekennzeichnet, daß das Keilstück (24) in Bewegungsrichtung vom Federspeicherzylinder (13) weg von einer Feder (49) belastet ist (Fig. 4-6).

11. Bremszange nach Anspruch 3, wobei der Federspeicherzylinder (13) eine Notlöseeinrichtung mit Schraubgetriebe aufweist, dadurch gekennzeichnet, daß der Druckstößel (29) von einer Feder (31) in Andrückrichtung der zweiten Rolle (28) an die Keilfläche (27) belastet ist .

## Claims

1. Brake calliper particularly for disc brakes of railway vehicles provided in a multiple arrangement per wheel set axle, with two brake calliper levers (2, 3), which carry brake shoes (7) on their first, facing ends, which can be pressed on both sides against a brake pressure plate engaging between these two ends, the brake calliper levers (2, 3) being coupled flexibly with each other in the middle region of their longitudinal extent by means of a connecting rod (4), the other ends of the brake calliper levers (2, 3) being expandable by a wedge gear operable via the spring force of a spring-loaded cylinder (13) loadable by means of compressed air, and the wedge part (24) of the wedge gear, linearly displaceable and connected with the piston rod of the spring-loaded cylinder, protruding between the other ends of the brake calliper levers (2, 3) and being arranged to roll over rollers (26, 28) rotatably coupled with these levers, the spring-loaded cylinder being arranged with its axis (18) at least approximately at right-angles to a brake calliper plane (5) passing through the two brake calliper levers (2, 3) and the connecting rod (4), to one side of the brake calliper plane (5),
characterised in that the spring-loaded cylinder under its spring pre-loading is operative to draw the wedge part (24) between the rollers (26, 28), one wedge surface (27) being slightly convexly curved over its longitudinal extent.

2. Brake calliper according to claim 1, characterised in that the wedge part (24) has a wedge surface (27) on only one side and on the opposite side has a surface (25) running parallel to the axis of the spring-loaded cylinder (13).

3. Brake calliper according to claim 2, characterised in that the housing (14) of the spring-loaded brake cylinder (13) is pivoted on the other end of one brake lever (2), at least a first roller (26), rotatable around a rotational axis running essentially parallel to the longitudinal direction of the brake calliper levers (2, 3), is positioned on the housing (13[sic]) at a distance from the brake calliper plane (5), the roller rolling on the surface (25) of the wedge part (24) running parallel to the axis (18) of the spring-loaded cylinder (13), and that the wedge surface, arranged opposite the surface (25) on the wedge part and forming with it a wedge rising in the direction away from the spring-loaded cylinder, rolls on a second roller (28), which is mounted rotatably about a rotational axis parallel to the rotational axes of the other roller (26) in the brake calliper plane (5) on a push rod (29) displaceable in the housing (14) in the direction of separation of the two other ends of the brake calliper levers (2, 3).

4. Brake calliper according to claim 3, characterised in that the wedge surface (27) has a steeper slope in its region effective in the release or towards the inactivated stop condition than in the subsequent region effective in the fixed braking condition of the disc brake.

5. Brake calliper according to claim 3, characterised in that the straight line connecting the axes of the first (26) and second (28) rollers runs approximately at a right-angle to the wedge surface (27).

6. Brake calliper according to claim 3 or 5, characterised in that a further roller (26) is positioned on the housing in mirror-image fashion, the brake calliper plane (5) forming the mirror plane (Fig. 2, 3).

7. Brake calliper according to claim 6 or 7, characterised by the combination of the spring-loaded cylinder (13) with a service brake cylinder (36) arranged between the other ends of the brake calliper levers (2, 3) with its axial direction in the direction of spreading of these ends, the housing of the service brake cylinder (36) and the housing of the spring-loaded cylinder (13) forming a common, if need be multipart, fixed housing (13), the rollers (26, 28) and the wedge-formed part (24) are situated in the outer air chamber of the service brake cylinder (36) and the push rod (29') forms at the same time the piston rod of the service brake cylinder (36).

8. Brake calliper according to claim 7, in which the service brake cylinder includes a multipart piston rod, comprising a piston rod tube (40) coupled with the piston (38), an adjusting device arranged in this and comprising a threaded spindle (41) with at least one nut (42) and an output stem, characterised in that the first roller(s) (26) is mounted on the housing and the second roller (28) is mounted on a sleeve part (45) which surrounds the piston rod tube (40) and is connected via tie rods (48) to the piston (38).

9. Brake calliper according to claim 8, characterised in that in each case two first (26) and two second rollers (28) are provided, which are arranged coaxial to each other on both sides of the piston rod, that the wedge part (24) is forked and encloses the piston rod with its prongs (46), and that the sleeve part (45) is mounted displaceably on a cylindrical socket (44) fixed in the housing and enclosing the piston rod pipe (40).

10. Brake calliper according to claim 9, the spring-loaded cylinder having an emergency release device with screw gearing, characterised in that the wedge part (24) is loaded by a spring (49) in the direction of movement away from the spring-loaded cylinder (13) (Fig. 4-6).

11. Brake calliper according to claim 3, the spring-loaded cylinder having an emergency release device with screw gearing, characterised in that the push rod (29) is loaded by a spring (31) in the direction of pressing the second roller (28) against the wedge surface (27).

## Revendications

1. Etrier de frein pour des freins à disque, prévus notamment selon une disposition multiple pour chaque arbre d'essieu monté, de véhicules sur rails, comportant deux leviers (2,3), qui portent, sur des premières extrémités situées en vis-à-vis, des mâchoires de frein (7), qui peuvent être serrées, des deux côtés, contre un disque de frein (8) s'engageant entre ces extrémités, et dans lequel les leviers (2,3) de l'étrier de frein sont accouplés entre eux, d'une manière articulée, dans la partie centrale de leur étendue en longueur, au moyen d'une tige de traction (4), et les secondes extrémités des leviers (2,3) de l'étrier de frein peuvent être écartées l'une de l'autre par un mécanisme à coin, apte à être actionné par la force du ressort d'un cylindre à ressort accumulateur (13), pouvant être tendu au moyen d'air comprimé, tandis que l'élément en coin (24) du mécanisme à coin, déplaçable linéairement et relié à la tige de piston (23) du cylindre à ressort accumulateur (13), s'engage entre les secondes extrémités des leviers (2,3) de l'étrier de frein et peut rouler sur des galets (26,28) couplés en rotation à ces leviers, le cylindre à ressort accumulateur (13) étant disposé, avec l'axe au moins approximativement perpendiculaire à un plan (5) de l'étrier de frein, qui passe par les deux leviers (2,3) de l'étrier de frein et la tige de traction (4), sur un côté du plans (5) de l'étrier de frein,
caractérisé en ce que le cylindre à ressort accumulateur (13) agit de manière à tirer l'élément en coin (24) entre les galets (26), sous la sollicitation de son ressort accumulateur, une surface en coin (27) étant incurvée sous une forme légèrement convexe sur son étendue en longueur.

2. Etrier de frein selon la revendication 1, caractérisé en ce que l'élément en coin (24) comporte une surface en coin (27) sur un seul côté et, à l'opposé, une surface (25) qui s'étend parallèlement à l'axe du cylindre à ressort accumulateur (13).

3. Etrier de frein selon la revendication 2, caractérisé en ce que l'enveloppe (14) du cylindre de frein à ressort accumulateur (13) est articulée sur la seconde extrémité de l'un des leviers de frein (2), et, sur l'enveloppe (13) et à distance du plan (5) de l'étrier de frein, est monté au moins un premier galet (26), qui peut tourner autour d'un axe de rotation, sensiblement parallèle à la direction longitudinale des leviers (2, 3) de l'étrier de frein, et qui peut rouler sur la surface (25) de l'élément en coin (24), qui s'étend parallèlement à l'axe (18) du cylindre à ressort accumulateur (13), et en ce que la surface en coin (27), qui est disposée à l'opposé de la surface (25), sur l'élément en coin (24), et forme avec cette dernière un coin qui s'évase dans la direction d'éloignement du cylindre à ressort accumulateur (13), peut rouler sur un second galet (28), qui est monté, de manière à pouvoir tourner autour d'un axe de rotation s'étendant, parallèlement aux axes de rotation de l'autre galet (26), dans le plan (5) de l'étrier de frein, sur un poussoir (29) déplaçable dans l'enveloppe (14) dans le sens d'écartement des deux secondes extrémités des leviers (2, 3) de l'étrier de frein.

4. Etrier de frein selon la revendication 3, caractérisé en ce que la surface en coin (27), dans sa zone active dans l'état desserré ou dans l'état d'application sans force du frein à disque, possède une pente plus forte que dans la zone contigue, qui est active lorsque le frein à disque est dans l'état freiné à bloc.

5. Etrier de frein selon la revendication 3, caractérisé en ce que la droite reliant les axes du premier galet (26) et du second galet (28) est approximativement perpendiculaire à la surface en coin (27).

6. Etrier de frein selon la revendication 3 ou 5, caractérisé en ce qu'un autre galet (26) est monté sur l'enveloppe symétriquement par rapport au premiers galet, le plan (5) de l'étrier de frein formant le plan de symétrie (figures 2,3).

7. Etrier de frein selon la revendication 6 ou 7, caractérisé par la combinaison du cylindre à ressort accumulateur (13) avec un cylindre de frein de service (36), disposé entre les secondes extrémités des leviers (2,3) de l'étrier de frein, suivant une direction axiale qui s'étend dans la direction d'écartement de ces extrémités, l'enveloppe du cylindre de frein de service (36) et l'enveloppe du cylindre à ressort accumulateur (13) formant une enveloppe rigide commune (13) éventuellement constituée de plusieurs éléments, tandis que les galets (26,28) et l'élément en coin (24) sont situés dans la chambre pneumatique extérieure (39) du cylindre de frein de service (36), et le poussoir (29') constitue simultanément la tige de piston du cylindre de frein de service (36).

8. Etrier de frein selon la revendication 7, dans lequel le cylindre de frein de service comporte une tige de piston formée de plusieurs éléments, qui inclut un tube (40) accouplé au piston (38), un dispositif de rattrapage de jeu disposé sur cet tube et comprenant une broche filetée (41) possédant au moins un écrou (42) et des dispositifs d'accouplement (43) pour ce ou ces écrou(s) (42), et un poussoir de sortie, caractérisé en ce que le ou les premier(s) galet(s) (26) est ou sont monté(s) sur l'enveloppe (14) et le second galet (28) est monté sur un élément de douille (45) qui entoure le tube (40) de la tige de piston et est relié au piston (38) au moyen d'un tirant (48).

9. Etrier de frein selon la revendication 8, caractérisé en ce que deux premiers galets (26) et deux seconds galets (28) sont respectivement prévus, ces galets étant disposés respectivement coaxialement des deux côtés de la tige de piston, en ce que l'élément en coin (24) est réalisé sous forme d'une fourche et enserre, par ses parties de fourche (46) la tige de piston, et en ce que l'élément formant douille (45) est monté déplaçable en translation sur un embout tubulaire cylindrique (44) solidaire de l'enveloppe et entourant le tube (40) de la tige de piston.

10. Etrier de frein selon la revendication 9, dans lequel le cylindre à ressort accumulateur comporte un dispositif de desserrage d'urgence pourvu d'un engrenage à vis, caractérisé en ce que l'élément en coin (24) est chargé, par un ressort (49), dans une direction de déplacement l'éloignant du cylindre à ressort accumulateur (13) (figures 4-6).

11. Etrier de frein selon la revendication 3, dans lequel le cylindre à ressort accumulateur (13) comporte un dispositif de desserrage d'urgence pourvu d'un engrenage à vis, caractérisé en ce que le poussoir (29) est chargé, par un ressort (31), dans le sens de l'application du second galet (28) contre la surface en coin (27).
